# EUROPEAN PATENT APPLICATION

(11) **EP 4 804 103 A2**
(43) Date of publication of application: **09.09.2026**
(21) Application number: 26192587.9
(22) Date of filing: 12.10.2018
(51) Int. Cl.: G06Q 30/02

(54) **METHOD OF GENERATING LAYOUT DATA REPRESENTING THE ARRANGEMENT OF ARTICLES IN A GONDOLA**

(30) Priority: 13.10.2017 FR 1759598
(62) Document number(s) of the earlier application(s) in accordance with Art. 76 EPC: 18783036.9 / 3 695 365
(71) Applicant: VusionGroup, 92000 Nanterre (FR)
(72) Inventor: FILALI, Tarik, 95490 VAUREAL (FR); ROBIN, François, 75116 PARIS (FR); RÖßL, Andreas, 8570 VOITSBERG (AT); SCHWARZ, Thomas, 77749 HOHBERG (DE)
(74) Representative: Regimbeau

(57) **Abstract**

The invention concerns a method of generating layout data representing the arrangement of articles in a gondola, comprising:
• detecting electronic shelf labels in an image of the gondola;
• detecting rows of consecutive electronic shelf labels in the image of the gondola, wherein detecting a row of consecutive electronic shelf labels comprises detecting an alignment of a set of the detected electronic shelf labels;
• determining matching areas in the image of the gondola, each representing a product position in which an article associated with a corresponding electronic shelf label is expected to be shown, a matching area being determined according to a predetermined rule matching a detected electronic shelf label with a zone of the image based on a relative spatial relationship between the detected electronic shelf label, the detected row on which said electronic shelf label is located, and the adjacent electronic shelf labels in the same detected row.

## Description

### TECHNICAL FIELD

The present invention belongs to the field of management systems for electronic shelf labels disposed in shelves, especially shelves of a sales area.

### PRIOR ART

In many territories, there is a regulatory requirement for a sales area to display up-to-date information to customers related to the articles on sale in the sales area. Electronic shelf labelling solutions are widely used for the display of information related to articles on sale, such as price, price per weight, name of the articles, etc. An advantage of electronic shelf labels (referred to below as ESLs) is that the screen display of an ESL can be remotely controlled via radiofrequency, be it low frequency or high frequency, so that said screen display can be updated whenever information related to an article associated with the ESL is modified. Displayed information for each article on sale is preferentially updated in real-time in compliance with updates of a central file of a central file. Changes to the product information in the central file are automatically and very quickly translated into the information displayed to consumers on the shelves, whereas non-electronic shelf labels would have to be manually changed individually.

In this central file, each article on sale, identified by a unique item article identifier, is associated with several data such as price, name, price per weight... The link between a particular electronic shelf label and an article is typically identified by an association, in said central file, between a label identifier which is unique and particular to said ESL, and an article identifier.

An ESL is therefore associated with one single article in the central file of the sales area. In addition, an ESL in operation is held fixed at a specific location in a gondola, typically on a rail mounted on the edge of a shelf. The layout of articles in a sales area is preferentially represented in a realogram database, containing association information between pairs of a label identifier and a location inside the shelves, said location being the expected location of the matching area of the ESL identified by said label identifier. Alternatively, the realogram can contain association information between pairs of an article identifier (for instance an EAN number) and an expected location. The realogram database can be translated into a twodimensional or three-dimensional visual representation of the layout of the shelves, usable by the personnel of the sales area.

In a very advantageous manner, the realogram can be updated whenever an ESL is re-associated to a different article reference, in the central file which is described above. In addition, the realogram must also be updated whenever the location of a given ESL is changed. Such changes typically happen when new products are introduced in the sales area such as seasonal products, or when the shelf space allocated to an existing product is re-arranged in order to adapt the facing, and ensure that the availability of the product in the shelves corresponds to an expected level of stock and an expected consumption rate of the product.

The provision of such an up-to-date realogram database allows development of applications taking advantage of information of geolocation of articles and ESLs within the sales area, which can be directed to both customers of the sales area, or employees of the sales area. For example, international patent application WO 2013/153290 in the name of the Applicant discloses a method for communicating spatially localized information to a mobile terminal (such as a mobile phone of a customer) using known location information of electronic shelf labels within the shelves. For customers, satisfaction is improved because of optimized availability of the articles and reduced time for article picking, and the attractiveness of the sales area is improved. For personnel involved with preparation of the shelves and stock management, this results in improved productivity.

An issue with the existing state of the art is that when electronic shelf labels are deployed, the personnel of each sales area has to carry out a largely manual procedure for initializing location information for the realogram database. Gathering realogram data requires putting into correspondence the label identifiers and the matching areas of the shelves. Each of said areas is manually associated or re-associated with a label identifier, which is time-consuming and generates errors.

The international patent application WO 2017/017366 in the name of the Applicant discloses a method for automatically generating association data between articles and locations within the shelves, for a sequence of consecutive ESLs. However, this procedure requires at least preliminarily knowing the precise location of one ESL for each sequence. This may not be possible when realogram information must be gathered remotely, such as in the case mentioned above of brands monitoring the layout of their products in a plurality of sales areas.

Thus, there is a need for a method for updating realogram data which does not require manually scanning each electronic shelf label for associating areas of a gondola with label identifiers, and for a method which does not either require preliminarily knowing the location of a plurality of electronic shelf labels. There is, more generally, a need for a method for updating realogram data which can be carried out remotely.

### SUMMARY OF THE INVENTION

The present disclosure provides a method for initializing or updating a realogram database representing the layout of articles in a gondola which meets the needs cited above, by the provision of a plurality of electronic shelf labels being arranged in said gondola, each electronic shelf label having a unique label identifier, each label identifier of said plurality of electronic shelf labels being associated in a central file with a single article identifier,
each electronic shelf label having a matching area in the gondola, the article whose identifier is associated with said electronic shelf label being expected to be shown in said matching area, the position of said matching area being identified by a slot field,
the method comprising the following steps:
   for at least one label identifier, transmission via radiofrequency of an instruction causing the electronic shelf label identified by said one label identifier to emit an optical signal or an optical broadcast, and acquisition of an image or sequence of images displaying the gondola, the optical signal or broadcast emitted by said electronic shelf label being detectable in said image or sequence of images;
   automated recognition, in the acquired image or sequence of images, of the electronic shelf label emitting said optical signal or broadcast; association, in the realogram database, of said one label identifier with a slot field of the matching area of said recognized electronic shelf label.

The method defined above allows, once ESLs are deployed in a gondola, to automatically detect, in an image of a gondola, the matching area in the gondola of an ESL identified by one specific label identifier. Even if no realogram data is preliminarily known, this method allows initializing the realogram database. No physical intervention of the staff of the site where the gondola is located is needed, as acquisition of an image or sequence of images and detection of the matching areas of the ESLs is carried out automatically. This method also allows updating realogram data for a gondola.

Said method can advantageously, and in a non-limiting manner, be completed by the following features, taken alone or in any technically feasible combination:
- The electronic shelf label identified by said one label identifier comprises light-emitting means,
   and the optical signal is a light signal emitted from said light-emitting means;
- In this latter case, the light-emitting means emit light signals in one or several predetermined colors, and/or emit light signals in a predetermined timing pattern;
- As an alternative to the latter case, the electronic shelf label identified by said one label identifier comprises a screen display configured to be updated according to radiofrequency instructions,
   and the optical signal is displayed on the screen display as a response to the instruction transmitted via radiofrequency;
- In this latter case, the optical signal displayed on the screen display is an image pattern corresponding to said one label identifier, such as a QR code, a chessboard image, or a flashing animation;
- During the step of acquisition of the video sequence, several instructions are transmitted via radiofrequency corresponding to several label identifiers, and each of said several instructions causes a display of a different optical signal corresponding respectively to each of said several label identifiers.
- In this latter case, each optical signal has a different color, and the step of automated recognition is done by color recognition;
- The slot field is also associated in the realogram database with the article identifier which is associated in the central file with the label identifier of said electronic shelf label;
- At least one article identifier is associated in the central file with a plurality of label identifiers,
   and, during transmission of instructions via radiofrequency, the first server transmits a plurality of instructions corresponding respectively to each of said label identifiers, causing respectively each of the shelf labels identified by said label identifiers to emit an optical signal at differing times, and each of the slot fields recognized at the following step is associated with a different label identifier;
- The slot field which identifies a matching area of an electronic shelf label is defined by a combination of:
   a gondola identifier,
   a row number among consecutive rows of electronic shelf labels in said gondola,
   a shelf label number among consecutive shelf labels within said row.
- In this latter case, the method comprises a preliminary step of automated detection of the slot fields of all the matching areas present in the gondola, by recognition in an acquired gondola image of rows of shelf labels of the gondola and of consecutive electronic shelf labels within each row.

This latter feature applies advantageously in the case of a method for initializing a realogram database corresponding to the gondola, since the number of rows and the number of ESLs in each row is not necessarily preliminarily known in that case;
- The step of acquisition of an image or sequence of images is executed for each label identifier associated in the realogram database with a slot field of a matching area in the gondola,
   the method comprising an additional step of determination of electronic shelf labels which do not send any optical signal in all the acquired image or sequence of images, leading to a determination that said electronic shelf labels are not expected to be present in said gondola according to the information present in the realogram database.

This variant of the method comprises a verification of compliance between information currently present in the realogram database, and the real layout of the ESLs in the gondola, by spotting the ESLs present in the gondola which label identifier is not associated in the realogram database with a slot field of an area in the gondola;
- For a plurality of label identifiers of electronic shelf labels which are expected to be arranged in an expected order in the gondola according to the information present in the realogram database, instructions for emitting an optical signal are sequentially transmitted to said electronic shelf labels in the same order as the expected order, and the method comprises an additional step of verification that there is a match between a real order of the electronic shelf labels which are present on the gondola and said expected order.

This variant of the method allows to perform another verification of compliance between information of the realogram database and the real layout of ESLs, between the expected order of ESLs in the gondola and the real order, and allows spotting ESLs which are not at their expected position within the gondola;
- Transmission to the electronic shelf label of the instruction causing emission of an optical signal, and association in the realogram database of the slot field with the label identifier of the electronic shelf label emitting the optical signal, are carried out by two, or more, distinct servers.

According to a second aspect, the present disclosure concerns a system for display of items in a gondola, said system comprising:
a plurality of electronic shelf labels, having a radiofrequency peripheral for receiving radiofrequency signals, each electronic shelf label having a single label identifier,
a central server configured to access and modify a central file, wherein each label identifier is associated with a single article identifier, the central server being configured to communicate with the electronic shelf labels via radiofrequency,
a server which is either distinct or the same as the central server, configured to access and modify a realogram database,
the gondola being divided in a plurality of areas, each area being meant to contain a single article reference, each area being identifiable by a single slot field,
the realogram database storing associations between a slot field and a single label identifier,
an imaging device which is able to acquire an image or sequence of images of the gondola,
the server being configured to detect electronic shelf labels on said image or sequence of images via image recognition, and also being configured to detect optical signals or optical broadcasts emitted by the electronic shelf labels, and recognize slot fields corresponding to the optical signals or broadcasts.

Said system is advantageously and non-limitingly completed by the features below, taken alone or in any technically feasible combination:
- One of the electronic shelf labels of the system further comprises a screen display configured to be updated according to radiofrequency instructions;
- One of the electronic shelf labels further comprises light-emitting means, and said electronic shelf label is configured to emit light signals via said light-emitting means in one or several predetermined colors, and/or emit light signals in a predetermined timing pattern;
- In this latter case, the light-emitting indicator of the electronic shelf label is a LED source controlled by a control circuit receiving ON/OFF instructions via radiofrequency;
- The first central server communicates with the electronic shelf labels via a frequency of 868 MHz (megahertz), or 915 MHz, or 779 MHz, or 2,4 GHz (gigahertz), or lower than 40 KHz (kilohertz).

According to yet another aspect, the present disclosure provides a server for management of a realogram database representing the layout of articles in a gondola,
wherein each area of the gondola which corresponds to a single article reference is identified by a single slot field in the server,
wherein the realogram database is configured to store associations between a slot field of the gondola and a single label identifier of an electronic shelf label which is expected to be arranged in the gondola, wherein the server is configured to detect electronic shelf labels on an image or sequence of image of the gondola via image recognition,
wherein the server is configured to detect optical signals or optical broadcasts emitted by said electronic shelf labels, recognize slot fields corresponding to the optical signals or broadcasts, and associate, in the realogram database, label identifiers and recognized slot fields.

### BRIEF DESCRIPTION OF THE DRAWINGS

Other features and advantages of the invention will appear from the following detailed description, which is solely illustrative and non-limiting, in correspondence with the following annexed drawings:
**Figure 1** is a schematic front view of an electronic shelf label equipped with light indicators.
**Figure 2** represents an embodiment of a price management system for a sales area according to the invention.
**Figure 3** is a flowchart representing a method according to the invention for initializing or updating a realogram database for a gondola of a sales area, using light-emitting electronic shelf labels.
**Figure 4** is a flowchart representing steps of a particular embodiment of a method for initializing a realogram database.
**Figure 5** schematically represents an acquired front view of a gondola, after a step of recognition of electronic shelf labels according to the method of Figure 4 has been carried out.
**Figure 6** represents the same view of a gondola, after a step of recognition of rows of electronic shelf labels according to the method of Figure 4 has been carried out.
**Figure 7** represents the same view of a gondola after a step of transmission of instructions to ESLs for emitting light, according to the method of Figure 4.
**Figure 8** represents the same view of a gondola, after a step of registration of new association information in the realogram database according to the method of Figure 4.

### DETAILED DESCRIPTION OF PREFERRED EMBODIMENTS

In all the following, we will describe methods and systems related to the display of product information for customers and/or personnel of a sales area, using electronic shelf labels (or ESLs). However, it should be noted that a method according to the invention can be applied to a gondola comprising light-emitting electronic shelf labels which would not be part of a system for display of information related to products of a sales area. For instance, a system as described below, comprising light-emitting electronic shelf labels, could also be considered for stock management in a warehouse. A method according to the invention can even be carried out with ESLs not having a screen for display of information.

The system for updating or initializing realogram database information which will be described below is configured to identify a correspondence between a "matching area" visible in an acquired image of a gondola, and an ESL also visible in said image. The matching area of an ESL is an area of the gondola wherein the article associated with the ESL is expected to be shown. The system can use predetermined rules for automated recognition of the matching area of the gondola, starting from a given ESL. In the following, we consider a condition for identifying the matching area defined as follows: for a given detected ESL in a gondola, the zone which is situated immediately above said ESL, and situated between said ESL and the consecutive ESL on the right side, is determined as the matching area of said ESL in the gondola. We could consider the problem in reverse: for a given area of a gondola which is meant to show items, the corresponding ESL is the nearest ESL situated in the row immediately below said area of the gondola, on the left side. Alternatively, other rules could be considered for matching ESLs visible in an image of a gondola with zones of such image.

In addition, each area of a gondola is identified by a unique and specific reference, referred to below as a "product slot field" or "slot field", representing the position of said area. A specific, non-limiting mode for defining slot fields will be described below. Whenever reference is made to an ESL "corresponding to" a slot field, this means that the label identifier of the ESL is associated with the article shown in the area of the gondola identified by said slot field.

In the annexed drawings, the same numerical references are used to refer to identical or similar elements.

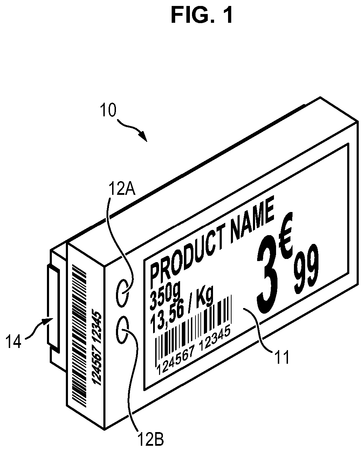

An exemplary electronic shelf label 10 with light emission capability is represented in **Figure 1**. Said ESL has a unique label identifier which unmistakably identifies said ESL. Advantageously, said label identifier is visible on the ESL, typically in the form of a scannable barcode. In the case of ESL 10, the label identifier is a 13-digit numerical string, which is shown in numerical form, and in barcode form, on a right side of the ESL. In addition, ESL 10 comprises on the front side a screen display 11, typically a liquid crystal display or a LED display, for showing information related to an article. This information typically comprises the price of the article, in compliance with regulatory requirements, along with other required information such as price per kilo. ESL 10 also comprises a casing 14 on the rear side, containing the electronics required for operating the ESL. Said electronics comprise in particular a RF (radiofrequency) peripheral, typically a chip and antenna allowing NFC (Near Field Communications) or RFID (Radio Frequency Identification) type communication with other peripherals. By means of said RF peripheral, the ESL can receive, and optionally also emit, RF signals. The casing 14 also comprises a microcontroller for translating received RF signals into electronic signals for controlling the screen display 11.

In addition, ESL 10 also comprises light-emitting means. The light-emitting means can comprise two or more light-emitting indicators 12A and 12B. Said two light-emitting indicators are able to emit light signals, in response to an instruction transmitted via radiofrequency to ESL 10. Said two light-emitting indicators can typically be LED sources, or alternatively, the light-emitting indicators can be any other kind of light sources able to briefly emit a detectable light signal. In the case of ESL 10, said two light-emitting sources are located on the front side of the ESL, in the top left corner. Alternatively, an ESL comprising only one light-emitting indicator could also be used for the methods which will be described below. The light-emitting indicators 12A ad 12B of ESL 10 are connected to a control circuit which is configured to receive electronic signals from the RF peripheral of the ESL. In this manner, the light-emitting means, in this case the light-emitting indicators 12A and 12B can light up in response to an instruction transmitted to ESL 10 via radiofrequency. Advantageously, the light-emitting means (light-emitting indicators 12A and 12B here) are configured to emit light signals in one or more colors. For instance, the indicator 12A can emit in blue and the indicator 12B can emit in red. Alternatively, one or more light-emitting indicators can emit light with a predetermined timing pattern (that is, a sequence of emissions of light signals for predefined durations), in order to facilitate recognition of the ESLs emitting an optical signal for recognition, or in order to allow discriminating several ESLs sending optical signals simultaneously.

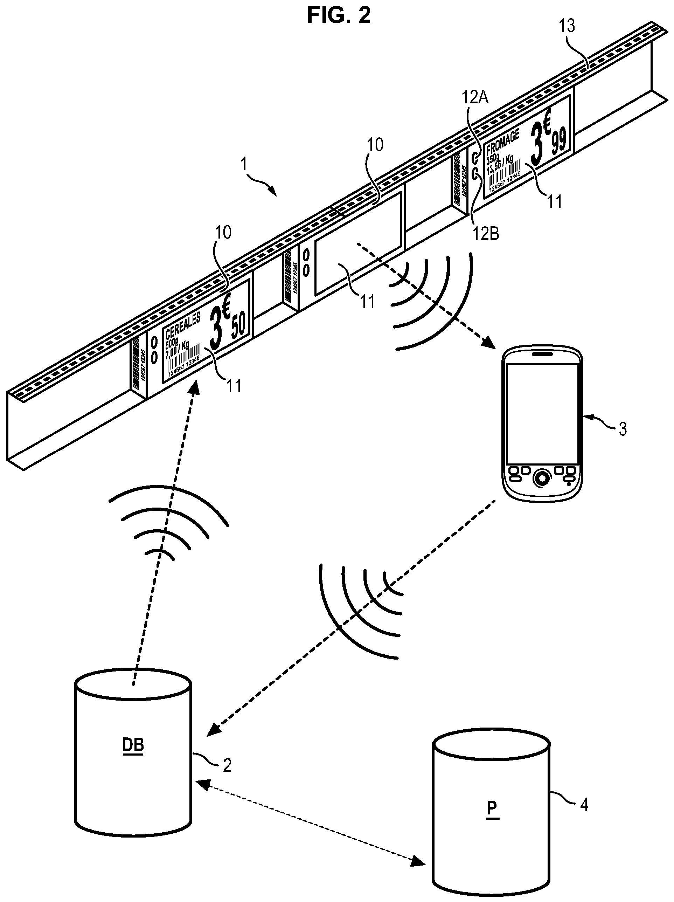

A system for showing article information in a gondola of a sales area is shown in **Figure 2**. This system comprises an electronic shelf labelling sub-system 1 disposed on one or a plurality of gondolas, and a first central server 2. The system also optionally comprises a mobile terminal 3. In addition, a second server 4, which can be part of the system of the sales area or external to the sales area, is provided.

The electronic shelf labelling sub-system 1 is as follows. Three ESLs 10 are arranged on a shelf rail 13 located on the edge of a shelf for showing articles, situated in a row of the gondola. Other shelf rails similar to shelf rail 13, on which ESLs are mounted, are preferably spread all over the sales area, so that the article information provided in the whole area is consistent with information stored in the central server 2. Each of the ESLs 10 corresponds to one article on sale, which can itself be identified by a specific article identifier, such as a EAN code. The mobile terminal 3 is typically a smartphone, or any other device which is able to both acquire a label identifier of an ESL, and communicate remotely with the central server 2. Communication between the mobile terminal 3 and the central server 2 can be carried out according to any communication network such as Wi-Fi, 3G or 4G, or DECT. The mobile terminal 3 can be able to acquire a label identifier of an ESL by image reading of a barcode situated on the ESL, or alternatively, by short-range communication with the ESL, such as NFC shot-range communication with a NFC peripheral of the ESL. The central server 2 is able to communicate via radiofrequency with each of the ESLs 10. Indeed, the central server 2 can transmit a RF signal (radiofrequency signal) comprising a label identifier, so that the information contained in the RF signal is specifically received by the ESL identified by said label identifier. RF communication between the central server 2 and the shelf labels can be carried out in any known radio frequency range. For instance, the central server 2 can communicate with the ESLs 10 with a range of 700 to 1000 MHz, especially in frequencies of 779 MHz, 868 MHz or 915 MHz. Alternatively, said frequency range can correspond to very high frequencies, such as 2.4 GHz frequency (Wi-Fi frequency). In another alternative, said frequency range can correspond to low frequencies, of fewer than 40 KHz. The central server 2 can additionally be able to communicate, via a local or remote network, with a display system which is not represented on Figure 2.

The first central server 2 shown in Figure 2 comprises a central file DB storing association information between ESLs present in the sales area and articles on sale, for instance in the form of table associations between a unique label identifier and a EAN number of an article. In addition, the first central server 2 is able to communicate with a second server 4. Said second server 4 comprises a realogram database P. The realogram database P comprises association information between product slot fields as described above, and label identifiers of ESLs. In addition, the realogram database P can also comprise association information between product slot fields and article identifiers, such as EAN numbers of articles. The second server 4 is also able to communicate (optionally via the central server 2 of the sales area) with an imaging device or a plurality of imaging devices not shown in Figure 2, which are able to take pictures and acquire an image or a sequence of images of the gondola, typically a video sequence showing the gondola.

In all the following, each product slot field will comprise three numerical indices (not visible on Figure 2). The first index i corresponds to a gondola of the sales area, which can comprise one or a plurality of rows which are stacked one on top of each other parallelly. The second index j corresponds to a particular row j of the gondola i. In all the following, rows are counted consecutively within one gondola, departing from the lowermost row (row 0) up to the uppermost row. The third index k corresponds to a particular electronic shelf label within the row j. In all the following, ESLs are counted consecutively along a row (for instance along shelf rail 13), departing from the leftmost ESL (ESL 1) up to the rightmost ESL. The combination of indices i, j, k in a triplet (i,j,k) allow unambiguous identification of a single area of the gondola, matched with a single ESL. In the following, the unique label identifier, identifying one ESL of the sales area, associated with the product slot field (i,j,k) of gondola i in realogram database P will be noted Pᵢⱼₖ. As mentioned above, each product slot field (i,j,k) is also preferably associated with an article identifier, which can be noted P'ᵢⱼₖ. In this latter case, the unique label identifier Pᵢⱼₖ will thus be associated in the central file DB of the first central server 2 with the article identifier P'ᵢⱼₖ.

In the case of the system of Figure 2, the second server 4 is distinct from the first central server 2. Thus, the function of management (access and modification) of the central file DB and communication with the electronic shelf labels 10, and the other function of management (access and modification) of the realogram database P, are provided by two distinct servers. While the first central server 2 is accessible by the personnel of the sales area, for management of the ESLs 10 and the central file DB, the second server 4 is not necessarily accessed by the personnel of the sales area, depending on whether said personnel is also in charge of the management of the realogram database P. It is possible that the realogram database P is solely used by an administrator of the second server 4, without an administrator of the first central server 2 being able to modify the realogram database P.

Indeed, in certain cases, it is very beneficial to implement a method for initializing or updating a realogram database as described above, with separate management of the central file of the ESLs and the realogram database. Besides retailers, brands are also increasingly interested in management systems based on realogram data, for controlling how their products are presented and advertised in each sales area. It is estimated that companies present in the retail sector dedicate up to 5% of their revenue on the field sales function, usually in the form of dedicated field sales agents. In the absence of remotely available article layout information, field sales agents must physically inspect each salespoint. For brands, having access to real-time realogram data of each of their target sales areas allows to remotely monitor access by customers to their products, while cutting down expenses for dedicated agents.

However, while electronic shelf labelling solutions have successfully entered many markets, there are still a lot of territories with a majority of sales areas not equipped with electronic shelf labels, especially smaller sales areas which do not necessarily belong to a large distribution network. In the current state of the art, when brands intend to monitor the way in which their products are displayed in a sales area, using a realogram database for the sales area, they have no other satisfactory solution than to request that the sales areas install a full electronic shelf labelling solution, and to request the personnel of the sales area to manage a realogram database (of which they need to request access). The method for initializing or updating a realogram database as described above, with separate management of the central file of the ESLs and the realogram database, allows the brand to have up-to-date realogram information about their products, with very limited intervention from the personnel of the sales area.

It should be noted that, alternatively, management of the realogram database P and management for the central file DB could be carried out by the same server (typically the first central server 2), said server being able to access and modify both databases. For instance, said latter configuration is advantageous when the personnel of the sales area deals with management of the realogram database P, in addition to dealing with management of the central file DB.

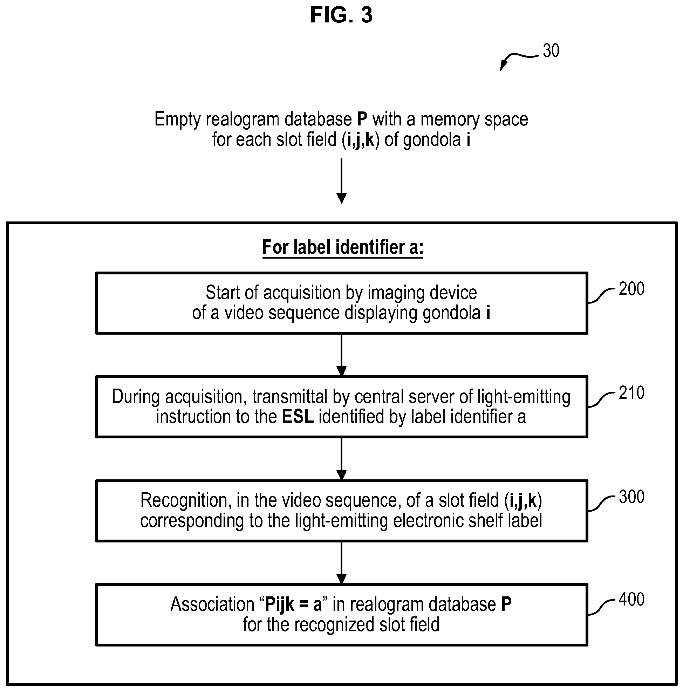

A method 30 according to the invention, for initializing a realogram database P, is now described in relation with **Figure 3**. Method 30 takes as an input an empty realogram database P for a gondola, identified by the gondola identifier I, of a sales area, the gondola being equipped with the system for showing article information described above. The empty realogram database P comprises a memory space for each slot field (i,j,k) of the gondola i. The slot fields (i,j,k) are as defined above. The steps of method 30 are executed by a processor of the second server 4. It should be noted that when the method 30 is executed, the slot fields (i,j,k) corresponding to the matching areas of gondola i (each matching area corresponding to one article reference) are already known by second server 4.

Steps of method 30 are implemented sequentially, starting from at least one given label identifier a. The label identifier a is not associated with any slot field, as the realogram database P has not been previously initialized. It is reminded that the second server 4 can access and modify the realogram database P, while the first central server 2 does not necessarily have access to said realogram database P.

At a step 200, the second server 4 sends an instruction for at least one of the imaging devices to start filming a video sequence, displaying a front side of gondola i. The light-emitting indicators of the ESLs disposed in the gondola i must be visible in the acquired video sequence.

At a step 210, while the imaging device is filming the front side of gondola i, the second server 4 communicates with the first central server 2, so that the central server 2 transmits an instruction via radiofrequency, causing the ESL 10 identified by label identifier a to emit a light signal via the light-emitting indicator 12A (or the indicator 12B, or both indicators).

The light signal can consist in one single brief or sustained light pulse emitted by said light-emitting indicator, or alternatively, the light signal can consist in a series of light pulses.

Alternatively to a video sequence, only one still image, or one sequence of images, of the ESLs of gondola i, can be acquired. It is necessary to have an image of the ESLs of the gondola acquired at the same time as emission of an optical signal by one or more ESLs, as a response of the instruction sent via radiofrequency at step 210.

At a subsequent step 300, which can be executed either while the imaging device is still filming or after resuming filming, the second server 4 analyzes the acquired video sequence, in order to attempt recognition of an ESL which has lit up as a result of the instruction transmitted by the first central server 2 at step 210.

At this point, two cases are possible. In a first case, label identifier a corresponds to an ESL which is indeed disposed in gondola i, and said ESL is not out of battery. In this case, the ESL has lit up at step 210 as a result of the instruction, and the second server 4 automatically recognizes said ESL in the video sequence, in any manner known to the man skilled in the technical field of image recognition. The second server 4 is configured to recognize the matching area of said recognized ESL, using a predetermined rule for putting into correspondence ESLs and areas of the gondola. Said matching area is identified by a slot field (i,j,k). In this manner, the location information for the matching area - that is, the slot field of the matching area - includes an identifier i of the gondola in which an ESL is located, an information of height (vertical position) within said gondola embodied by row number j, and an information of distance to an extremity of a row of the gondola (horizontal position) embodied by shelf label number k.

In a second case, no ESL of the gondola lights up as a result of the instruction transmitted at step 210 by the first central server 2. This can be for a variety of reasons:
- The ESL identified by label identifier a can indeed be on the gondola i, but has run out of battery;
- Said ESL can indeed be disposed in the sales area, but at a location which is not in gondola i;
- The label identifier a is not associated with any ESL of the sales area.

If the first abovementioned case occurs after step 300, a step 400 is subsequently executed. The label identifier is registered in the memory space corresponding to slot field (i,j,k) in the realogram database P, as a label identifier Pᵢⱼₖ. The slot field (i,j,k) is therefore initialized in the planogram database P.

Optionally, if association information between label identifier a and an article identifier is available in the central file DB, the slot field (i,j,k) can be associated in the planogram database P with the article identifier associated with the label identifier a, which is registered as the article identifier P'ᵢⱼₖ.

If the second abovementioned case occurs, no association is registered in the realogram database P. Advantageously, an alert is sent to an end-user of the system, using a display system connected to second server 4, in order to notify said end-user that the label identifier a does not identify an ESL which is physical present in gondola i.

The method 30 therefore allows initializing a realogram database remotely. Advantageously, a list of label identifiers identifying the ESLs expected to be disposed in the gondola i can be provided to the second server 4 prior to execution of method 30, so that the steps 200 to 400 are executed for each of the label identifiers of the list. As a result, a full realogram database containing associations between each of the ESLs of the gondola and slot fields (i.e. locations within the gondola) is obtained.

The method 30 could alternatively be used for updating a realogram database P, instead of initializing the realogram database P. This is useful when association information between slot fields and ESLs of the gondola is already known prior to executing the method for updating the realogram database. Steps 200 to 400 can be executed in the same manner for updating the realogram database, with step 400 resulting in replacement of a former association, between a slot field and a label identifier, by a new association.

In method 30 as described above, the light-emitting indicators 12A and/or 12B are used for detection of an ESL responding to the instruction transmitted by the first central server 2.

Alternatively, any type of optical signal, or any type of optical broadcast sent by the ESL as a response to the instruction transmitted via radiofrequency can be used, without changing the order of steps of method 30. As a particular type of optical broadcast, an electronic shelf label 10 disposed in gondola i can respond to the instruction by changing its display on screen display 11. Indeed, screen display 11 is configured to be updated according to the radiofrequency instructions. The microcontroller contained in casing 14 of the ESL of Figure 1 can translate received RF signals into electronic signals for controlling screen display 11. In all the following, the expression "optical signal" is to be understood as "optical signal, or optical broadcast emitted by an ESL".

An advantage of using this later type of optical signal is that the ESL 10 does not need to be equipped with a light-emitting indicator 12A or 12B. Any ESL having a controllable screen display 11 can be used in this case. Thus, method 30 can be executed even with a sales area already equipped with electronic shelf labels not having a light-emitting indicator.

In an embodiment, the optical signal sent by the ESL identified by label identifier a, as a result of the instruction of step 210, is a QR code corresponding to label identifier a displayed on the screen display 11. In this case, and if the resolution of the imaging device is sufficient, the server 4 can directly extract one or several stills of the video sequence, wherein several QR codes are visible, and associate read label identifiers with the slot fields (i,j,k) of the matching areas of the electronic shelf labels which have displayed a QR code. An advantage of using the QR code as an image pattern displayed on the screen display is that the displayed sign (the QR code) is intrinsically specific to each label identifier.

In an embodiment, the optical signal sent by the ESL is an image pattern displayed on the screen display 11. This image pattern can be a sign with predetermined properties in terms of size, location on the screen, etc. For instance, the image pattern can be a chessboard image. If the screen display 11 has color display capabilities, the color of the sign can also be predetermined. Insteadof displaying a fixed sign on screen display 11, a flashing animation can be displayed on the screen as a response to the instruction of step 210. Advantageously, each label identifier is stored in a database in association to a specific image pattern. An advantage of this embodiment is to render easier and quicker the detection of an ESL which reacts to the instruction, and the detection of the slot field (i,j,k) of the corresponding matching area, as several ESLs emitting optical signals can be detected simultaneously.

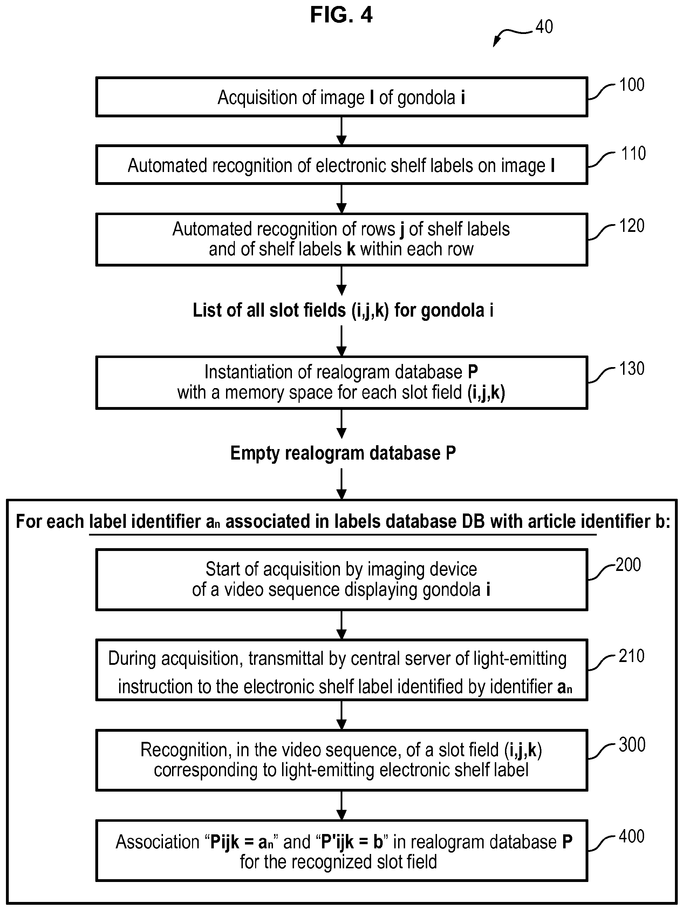

A method 40 for initializing a realogram database P for a gondola i according to a particular embodiment of the invention is now described in relation with **Figure 4**.

Method 40 is particularly advantageous when no information is preliminarily available on the number of rows and the number of ESLs disposed in gondola i. Indeed, method 40 allows automatic detection of this information.

In the example of Figures 4 to 8, steps 200 to 400 are executed for one or a plurality of label identifiers determined as being associated, in the central file DB, with the same given article identifier. Said article identifier corresponds to an article which is expected to be shown in gondola i. Here, said given article identifier is the identifier b, associated in the central file DB with a list of label identifiers {a₁;a₂;a₃}.

In this example, the starting point for initializing realogram information is not the label identifiers of the ESLs expected to be present in the gondola according to current realogram information. Instead, the starting point is an article identifier b, corresponding to an article which is expected to be shown in gondola i.

At step 100, a numerical image (or alternatively a video sequence) of the gondola i, wherein the ESLs disposed in the gondola are visible, is acquired by an imaging device. An image I of gondola i is obtained, and stored in memory of the second server 4.

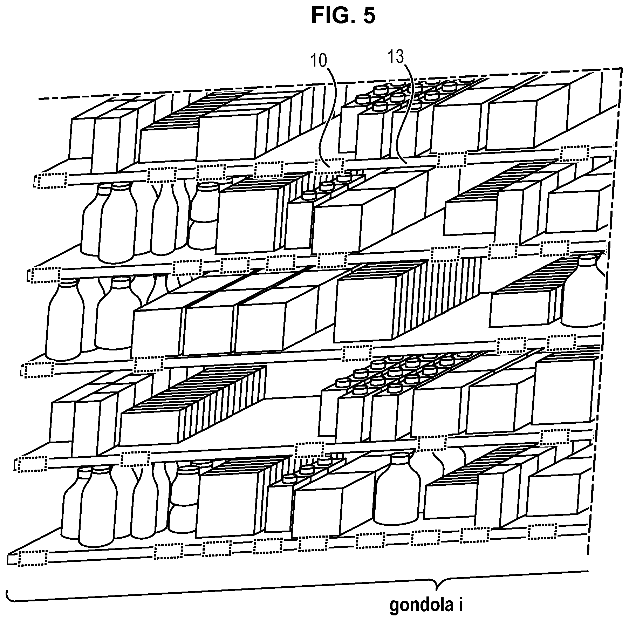

At step 110, automated detection of all present ESLs on the image I is carried out. This automated detection of electronic shelf labels on the acquired image is typically carried out by pattern recognition, with respect to a predetermined set of possible electronic shelf label shapes which are stored in the memory of second server 4. **Figure 5** corresponds to a result of step 110, wherein the shapes corresponding to the front side of an ESL are shown in dotted lines.

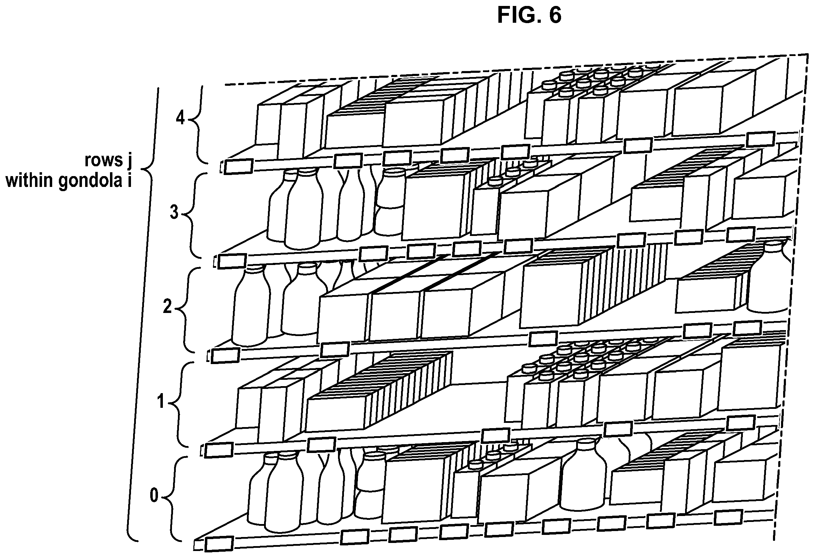

After all ESLs visible on the image have been singled out, a step 120 of recognition of rows of shelf labels (i.e. detection of sets of consecutive ESLs located ona same shelf rail 13) can be carried out. A row j is detected for each set of detected ESLs detected at previous step 110 which are approximately aligned. The rows can then be numbered starting from zero, from the lowermost row to the uppermost row. As an option, the ESLs of gondola i can receive an instruction for flashing in a defined pattern, in order to support accuracy of recognition of the rows. **Figure 6** corresponds to a result of this operation: in the gondola of Figures 5 to 8, five rows of ESLs are recognized.

Still at step 120, the shelf labels of each row j are recognized and numbered consecutively, from the leftmost shelf label to the rightmost shelf label, starting from one.

As a result of step 120, the second server 4 has in memory a list of slot fields (i,j,k) for gondola i, which was not previously available prior to execution of method 40.

The second server 4 instantiates, at step 130, an empty realogram database P with a memory space for each slot field (i,j,k) of the determined list.

Then, starting from article identifier b, a number n of label identifiers, in this case a₁, a₂ and a₃ with n = 3, respectively identifying ESLs 10-1, 10-2 and 10-3, are retrieved. Indeed, said label identifiers are associated in central file DB with article identifier b. It is possible that the second server 4 does not have direct access to the central file DB for retrieving said one or plurality of label identifiers. In the latter case, the first server 2 can receive an instruction from second server 4 based on article identifier b, and the first server can retrieve the association information between said article identifier and ESLs from the central file DB. Alternatively, if the realogram database is already initialized, the association information between label identifiers a₁ to a₃ and article identifier b can already be present in the realogram database P and be retrieved by second server 4.

Then, steps 200 to 400 of method 40 represented in Figure 4 are executed. Said steps are equivalent to steps 200 to 400 of the method 30 of Figure 3.

In a first embodiment, the steps 200, 210 and 300 are executed sequentially for each of label identifiers a₁, a₂ and a₃. Either a single video sequence is acquired for detection of all ESLs 10-1, 10-2 and 10-3 in gondola i, or separate video sequences are sequentially acquired. In the following, the case of a single acquired video sequence is described. During step 200, acquisition of the video sequence of the front side of gondola i is initiated.

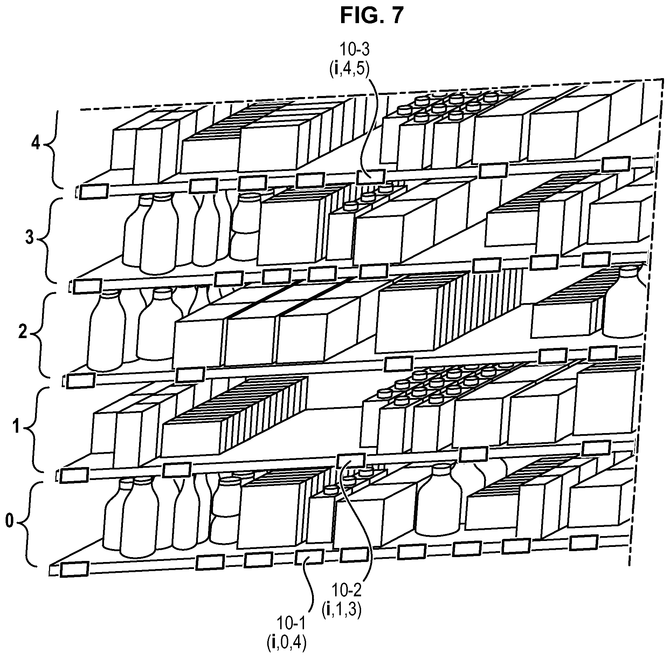

In said first embodiment, at step 210, while the video sequence is acquired, the central server 2 transmits via radiofrequency instructions at differing times to the ESLs corresponding to each of the previously retrieved label identifiers a₁, a₂ and a₃, i.e. each ESL 10-1, 10-2 and 10-3, causing each of said ESLs to emit an optical signal at differing times. As can be seen in **Figure 7**, the three ESLs which respond to the instructions sent at step 210 have the following positions in gondola i:
- Label identifier a₁ corresponds to ESL 10-1 and slot field (i,0,4);
- Label identifier a₂ corresponds to ESL 10-2 and slot field (i,1,3);
- Label identifier a₃ corresponds to ESL 10-3 and slot field (i,4,5).

The optical signal sent by the ESLs as a response to the instructions transmitted at step 210 can be any type of identifiable optical signal, such as previously-described examples of a light signal from a light-emitting indicator, or a specific sign displayed on the screen display of the ESL.

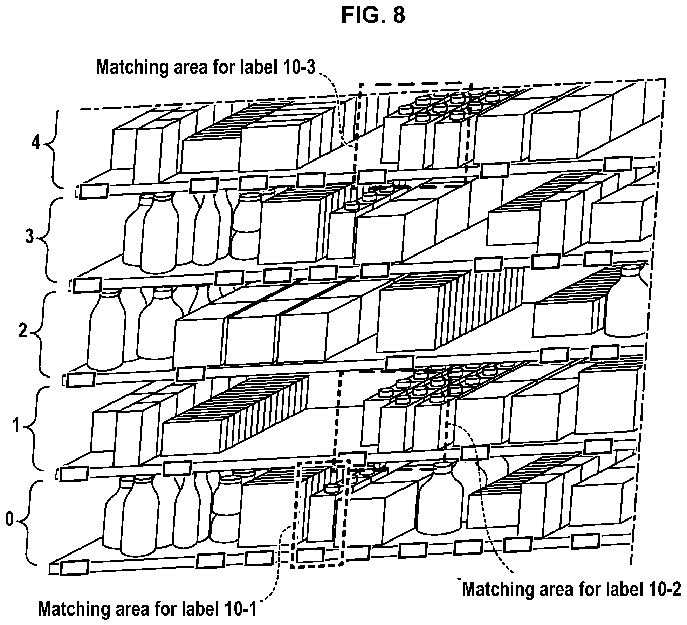

At step 300 for said first embodiment, which can be executed either while the imaging device is still filming or after resuming filming, the second server 4 analyzes the acquired video sequence, and recognizes the position of the ESLs 10-1, 10-2 and 10-3 which have responded to the instructions corresponding respectively to label identifiers a₁, a₂ and a₃. Indeed, the second server 4 knows at what time the instructions have been sent, and there is no ambiguity about the label identifier corresponding to an ESL which is recognized as emitting a light signal in the video sequence. Each of the positions of ESLs 10-1, 10-2 and 10-3 is recognized, in the form of a particular slot field (i,j,k). **Figure 8** corresponds to a result of said step 300. The second server 4 recognizes separately the position of each ESL which has responded to the instructions.

In a second embodiment of steps 200, 210 and 300, recognition of the slot fields (i,j,k) corresponding to label identifiers a₁, a₂ and a₃ is not carried out with sequential instructions for emitting an optical signal, but with one instruction sent to ESLs 10-1, 10-2 and 10-3 at the same time. In this second embodiment, discrimination between ESLs 10-1, 10-2 and 10-3 is not possible using the order of times of transmission of the radiofrequency instruction for emitting an optical signal, because ESLs 10-1, 10-2 and 10-3 are likely to respond to the instruction at the same time. Thus, in order to make said discrimination, each ESL responds to the instruction with a different optical signal.

For example, ESLs 10-1, 10-2 and 10-3 can respond by displaying the QR code corresponding respectively to label identifier a₁, a₂ and a₃ on their screen display.

As a second example, ESLs 10-1, 10-2 and 10-3 can display different signs on their screen display, having distinct properties which can be optically recognized in the acquired video sequence. In an advantageous embodiment, said ESLs are capable of displaying color - for instance, if the screen display 11 comprises RGB light-emitting diodes - and each ESL responds to the instruction by a monochromatic display of a different color. Server 4 knows for each label identifier a₁, a₂ and a₃ ... which color corresponds to which label identifier, so that server 4 is able to recognize at step 300 which slot field (i,j,k) should be associated with which label identifier in the realogram database P.

The example presented here is limited to three ESLs. As a variant, which is advantageous when a great number of ESLs are expected to respond to the radiofrequency instructions by emitting an optical signal, a sequence of images of the gondola is acquired, and in each image the optical signal displayed by each ESL changes. In this manner, each ESL displays a different sequence of optical signals, such that by analyzing the sequence of images at a subsequent step, each ESL of the gondola can be differentiated from the others.

An advantage of this second embodiment for steps 200 to 300 - said advantage not being limited to the present example of several label identifiers corresponding in the central file DB with the same article identifier, but being applicable for any case wherein realogram information would need to be acquired simultaneously for several ESLs - is that the realogram information is acquired quickly. This results in improved performance, and minimized interference with the regular activity of the sales area. Indeed, all ESLs respond to the instruction in a limited amount of time, and all ESLs of the gondola can recover their regular display afterwards.

Then, following steps 200 to 300 according to one or the other of the embodiments described above, at step 400, the recognized positions are registered in the realogram database P. Thus, label identifier a₁ (ESL 10-1) is associated with slot field (i,0,4), that is, label identifier a₁ is registered as Pᵢ₀₄ in the memory of second server 4. If the realogram database P corresponds to a visual representation of gondola i, the area of the gondola corresponding to slot field (i,0,4), that is, the fourth area starting from the left of the first row starting from the bottom, is recognized as the matching area for the label identifier a₁.

Similarly, label identifier a₂ is associated with slot field (i,1,3), and label identifier a₃ is associated with slot field (i,4,5).

Optionally, article identifier b can also be registered in realogram database P in association with detected slot fields (i,0,4), (i,1,3), and (i,4,5), by setting the values of terms P'ᵢ₀₄, P'ᵢ₁₃ and P'ᵢ₄₅ to b.

Steps 200 and 400 can be repeated for each of the article identifiers of articles which are expected to be shown in gondola i. Then, the second server 4 is able to determine which articles are indeed not associated with ESLs disposed in gondola i.

In an alternate embodiment, which is not represented in the annexed drawings, instead of starting from an article identifier corresponding to an article which is expected to be shown in gondola i, the starting point for execution of steps 200 to 400 could be a list of label identifiers, which identify ESLs which are supposed to be disposed in gondola i. Said list of label identifiers can for example be obtained from the realogram database P, if said realogram database is not empty.

Steps 200 to 400 would then be executed in the same manner as above, except that it would not be necessary to refer to the central file DB, as the label identifiers for the ESLs which must receive instructions are already known.

In this case, steps 200 and 400 can be repeated for each of the label identifiers of a list of ESLs expected to be disposed in gondola i. Then, the second server 4 is able to determine which label identifiers of the list correspond to ESLs which have not responded to any instruction. The corresponding ESLs would then be determined as missing from gondola i.

It is also possible, in both cases - executing steps 200 to 400 repeatedly either starting from article identifiers, or starting from label identifiers - to add a step of determination of ESLs visible in gondola i which do not send any optical signal in all the acquired video sequences. Said ESLs, even though they are physically present in gondola i, are therefore not expected to be present in the gondola according to the information present in the realogram database P, or they are associated with articles which are not expected to be shown in gondola i.

The man skilled in the art will understand that all steps described above in relation with Figures 4 to 8 can be easily adapted for updating a realogram database, instead of initializing it.

In a variant which is not illustrated in the annexed drawings, once a realogram database P is initialized or updated, it is possible to execute an additional subsequent step of verification of the order of the ESLs in gondola i. In said additional step, the second server 4 can consider a plurality of label identifiers of electronic shelf labels, which are expected to be arranged in an expected order in according to information present in the realogram database P. The second server 4 will typically consider all of the label identifiers which are associated in the realogram database P with a position in gondola i, in a certain order - for instance, from the uppermost row to the lowermost row, and from the leftmost ESL of each row to the rightmost ESL. Once the ordered list of label identifiers has been obtained, corresponding to an "expected order" of the ESLs, instructions for emitting a light signal can be sequentially transmitted to the ESLs in the same order as the expected order, while a video sequence of the front side of gondola i is being acquired. The second server 4 can then carry out a verification that there is a match between a real order of the ESLs, and said expected order. If the real order matches the expected order, optical signals (either light-emitting signals, or specific signs shown on a screen display, or any other type of recognizable optical signal) emitted by the ESLs should be detected in the right order in the video sequence - in the example above, optical signals should be detected starting from the top-left corner, going to the right and then going to the bottom, up until the bottom-right corner. A discrepancy between the real order and the expected order is therefore easy to detect.

## Claims

1. A method of generating layout data representing the arrangement of articles in a gondola, comprising:
• detecting (110) electronic shelf labels (10) in an image of the gondola;
• detecting (120) rows of consecutive electronic shelf labels in the image of the gondola, wherein detecting a row of consecutive electronic shelf labels comprises detecting an alignment of a set of the detected electronic shelf labels;
• determining matching areas in the image of the gondola, each representing a product position in which an article associated with a corresponding electronic shelf label (10) is expected to be shown, a matching area being determined according to a predetermined rule matching a detected electronic shelf label with a zone of the image based on a relative spatial relationship between the detected electronic shelf label, the detected row on which said electronic shelf label is located, and the adjacent electronic shelf labels in the same detected row.

2. The method of claim 1, further comprising assigning a row number (j) to each detected row and assigning a shelf label number (k) to each detected electronic shelf label, wherein the shelf label number represents the consecutive position of the respective electronic shelf label (10) within a detected row (j).

3. The method of claim 2, further comprising identifying a position of a matching area by a slot field (i, j, k) corresponding to the position of a respective electronic shelf label, wherein the slot field is defined by a combination of:
• a gondola identifier (i),
• the row number (j) assigned to the detected row on which the respective electronic shelf label (10) is located; and
• the shelf label number (k) assigned to respective electronic shelf label.

4. The method of one of claims 1 to 3, wherein according to the predetermined rule, for a detected electronic shelf label (10) in the gondola, the matching area is the zone situated immediately above said detected electronic shelf label (10), and situated horizontally between said detected electronic shelf label (10) and the next detected electronic shelf label (10) on the right side of said detected electronic shelf label in the same detected row of consecutive electronic shelf labels.

5. The method of any one of claims 1 to 4, wherein detecting (110) the electronic shelf labels (10) on the image of the gondola is carried out by pattern recognition with respect to a predetermined set of possible electronic shelf label shapes stored in a memory of a server (4).

6. The method of any one of claims 1 to 5, wherein the electronic shelf labels (10) receive an instruction for flashing in a defined pattern to support accuracy of the detecting of the rows.

7. The method of any one of claims 1 to 6, further comprising, for each electronic shelf labels (10):
• transmitting (210) via radiofrequency an instruction causing said electronic shelf label (10) to emit an optical signal unique to the said electronic shelf label (10);
• acquiring (200) a sequence of images displaying the gondola (i) while said optical signal is being emitted;
• automated recognition (300) in the acquired image or sequence of images of the electronic shelf label (10) emitting said optical signal; and
• associating (400) in a database (P) a unique label identifier of said recognized electronic shelf label (10) with the matching area representing a product position in which an article associated with said recognized electronic shelf label (10) is expected to be shown.

8. The method of claim 7, wherein the electronic shelf labels (10) each comprises light-emitting means (12A, 12B) configured to emit light signals in one or several predetermined colors, and/or with a predetermined timing pattern.

9. The method of one of claims 7 and 8, comprising an additional step of determination that a detected electronic shelf label is not recognized in the acquired image or sequence of images.

10. A server configured to:
• detect (110) electronic shelf labels (10) in an image of the gondola;
• detect (120) rows of consecutive electronic shelf labels on the image of the gondola, wherein detecting a row of consecutive electronic shelf labels comprises detecting an alignment of a set of the detected electronic shelf labels;
• determine matching areas in the image of the gondola, each representing a product position in which an article associated with a corresponding electronic shelf label (10) is expected to be shown, a matching area being determined according to a predetermined rule matching a detected electronic shelf label with a zone of the image based on a relative spatial relationship between the detected electronic shelf label, the detected row on which said electronic shelf label is located, and the adjacent electronic shelf labels in the same detected row.
